# EUROPEAN PATENT APPLICATION

(11) **EP 4 793 685 A2**
(43) Date of publication of application: **19.08.2026**
(21) Application number: 26188995.0
(22) Date of filing: 09.12.2022
(51) Int. Cl.: G02B 26/00

(54) **OPTICAL DEVICE AND TUNING UNIT FOR THE OPTICAL DEVICE**

(30) Priority: 10.12.2021 WO PCT/IB2021/061555
(62) Document number(s) of the earlier application(s) in accordance with Art. 76 EPC: 22212670.8 / 4 194 906
(71) Applicant: Optotune Switzerland AG, 8953 Dietikon (CH)
(72) Inventor: ASCHWANDEN, Manuel, 8953 Dietikon (CH)
(74) Representative: Schulz Junghans Patentanwälte PartGmbB

(57) **Abstract**

An optical device is suggested, which comprises a container (2) enclosing an internal space (3), wherein the internal space (3) is filled with a transparent liquid (4), and wherein the container (2) comprises a transparent bottom (5) and a transparent and elastically deformable membrane (6) opposing said bottom (5) such that the liquid (4) is arranged between the membrane (6) and the bottom (5), a circumferential lens shaping element (10) connected to the membrane (6) so that a circumferential edge of the lens shaping element (10) defines a central area (8) of the membrane (6) so that light can pass through the container (2) via the central area (8) and the bottom (5), wherein the lens shaping element (10) is deformable and comprises a plurality of actuation points (11), wherein in each of the actuation points (11) the lens shaping element (10) is moveably mounted with respect to the transparent bottom (5) by a bearing means (12) and wherein at least one actuation point (11) is displaceable with respect to the transparent bottom (5).

## Description

The present invention relates to an optical device, a tuning unit for the optical device and an optical system with the optical device and the tuning unit.

Optical devices, particularly ophthalmic devices, are known from the state of the art. Such an optical device might comprise a rigid lens, which focuses or disperses a light beam and can be used in various imaging devices in order to correct aberrations. However, rigid lenses have a correspondingly rigid geometry so that different lenses are required in order to correct different aberrations. This is particularly disadvantageous if the optical device is to be used by people with different degrees of visual impairment. Another type of optical device comprises an elastically deformable membrane, which can be adjusted with respect to its position and curvature such that the optical properties of the optical device change. This allows to adjust the optical properties of the optical device depending on which type and degree of aberration is to be corrected.

It is an object of the present invention to provide an optical device whose optical properties can be adjusted in a simple manner.

This object is solved by an optical device according to claim 1, a tuning unit according to claim 8 and an optical system according to claim 17. Preferred embodiments of the present invention are subject-matter of the corresponding dependent claims.

According to the invention, the optical device comprises a container, which encloses an internal space. The internal space is filled with a transparent liquid. The container comprises a transparent bottom and a transparent and elastically deformable membrane opposing said bottom such that the liquid is arranged between the membrane and the bottom. The optical device further comprises a circumferential lens shaping element connected to the membrane so that a circumferential edge of the lens shaping element defines a central area of the membrane so that light can pass through the container via the central area and the bottom. The lens shaping element is deformable and comprises a plurality of actuation points. In each actuation point, the lens shaping element is moveably mounted with respect to the transparent bottom by a bearing means and wherein at least one actuation point is displaceable with respect to the bottom.

The invention is based on the idea that by a punctual adjustment of the shaping element, the position and/or the curvature of the central area of the membrane, can be adjusted with regard to the transparent bottom in a simple way. Thus, a light beam which passes through the container via the central area and the bottom can be influenced in various ways, according to a certain type of aberration that shall be corrected. According to the invention, the optical device has a structure that allows its optical properties to be adjusted simply and as required, depending on the kind of aberration that shall be corrected by the optical device.

The term container refers to a receptacle which is formed in or attached to the optical device and comprises a section in which the internal space is formed. The invention is not limited to a specific exterior geometry of the container or the internal space. Preferably, however, the container may have a linear, longitudinal axis, which a person skilled in the art might define as an optical axis of the optical device. Moreover, the container may have a lateral axis, which extends laterally to the longitudinal axis and/or the optical axis of the optical device.

Preferably, the container has a substantially circular cross-section in at least one sectional plane that extends perpendicular to the longitudinal axis and/or the optical axis. It is also within the scope of the invention that the cross-section of the container in said sectional plane or another sectional plane is non-circular, for example oval or polygonal. Preferably, the transparent bottom is flat. In particular, an outer contour of the transparent bottom can correspond to the at least one cross-section of the container.

The lens shaping element is arranged in the area of the membrane and preferably has a circumferential geometry that essentially corresponds to the cross section of the container. The term "circumferential" is not limited to a circular shape of the lens shaping element, but rather refers to any geometry of the lens shaping element that extends perimetrically around the central area of the membrane. The lens shaping element is connected to the membrane in such a way that an adjustment or deformation of the lens shaping element at one of the actuation points leads to a corresponding adjustment or deformation of the central area of the membrane. The term actuation point describes a section of the lens shaping element at which a force may act to cause a displacement of the lens shaping element in its actuation point according to a path that is defined by the bearing means.

Due to the elasticity of the membrane, the central area of the membrane can have multiple modes that define its position within the optical device or its shape. It is within the scope of the invention that in at least one mode, the central area is flat and spaced plane-parallel to the transparent bottom. In another state, the central area may be convex or concave and accordingly curved with respect to the flat mode. It is the essence of the invention that a mode of the membrane, in particular the central area, can be adjusted as needed by actuating the lens shaping element in its actuation points, which leads to an adjustment of the shape of the membrane.

The internal space is formed inside the container and has a spatial volume, which is at least delimited by the elastically deformable membrane and the transparent bottom of the container. Preferably at least one lateral wall delimits the internal space and its spatial volume between the membrane and the transparent bottom. While the shape of the container can be adjusted by deformation of the elastic membrane, the spatial volume of the interior is constant regardless of the shape of the container. By adjusting at least one actuation point of the lens shaping element, the hydraulic pressure within the internal space may be increased and decreased, which may cause the central area of the membrane to change its shape. This allows to change the optical properties of the optical device.

The internal space is filled with the transparent liquid, preferably an optical oil. The transparent bottom may comprise or be formed of a silicate glass or an injection molded plastic. The transparent and elastically deformable membrane preferably comprises Polydimethylsiloxane (PDMS).

A bearing means in the sense of the invention comprises all means which are suitable to be arranged on the optical device and along which the lens shaping element is adjustable in one of its actuation points. In particular, the bearing means may comprise a guiding element that defines an actuation path for one of the actuation points of the lens shaping elements. The invention is not limited to a specific path geometry, along which the actuation points of the lens shaping element are adjustable. It is possible that the bearing means comprises a guide element having a linear axis and to which the lens shaping element can be arranged to be adjusted along the longitudinal axis. An additional actuator may be arranged to the guide element and be adjustable along the longitudinal axis to exert an adjustment force on the lens shaping element and to adjust it along the longitudinal axis of the bearing element. However, the invention is not limited to a specific way, how the lens shaping element is actuated in one of its actuation points in order to cause a displacement of the lens shaping element in the actuation point.

With the preferred embodiment described above, it is not only possible to adjust the membrane via a uniform adjustment movement of the lens shaping element in the actuation points, but rather by a relative displacement of at least one actuation point to another actuation point to cause a deformation of the membrane and the central area enclosed by the lens shaping element. This allows to set various geometries for the central area in order to correct different aberrations via the optical device.

Preferably, the lens shaping element has a geometry and a material, which are selected such that a deformation of the lens shaping element is easily possible. At the same time, the lens shaping element is rigid enough that it does not need to be supported between its actuation points when no actuation force is applied to the lens shaping element. For example, the lens shaping element may comprise or be formed of a flexible plastic or a metal.

In a preferred embodiment, the optical device comprises the optical axis, along which the light passes through the container via the central area and the transparent bottom and the bearing means each comprise a longitudinal axis, which is parallel to the optical axis. The bearing means each are configured to adjustably guide the lens shaping element along its respective longitudinal axis in each of the actuation points. Preferably, adjustment and/or deformation of the lens shaping element is possible along a plurality of actuation axes, each of which is parallel to the optical axis of the optical device and to each other.

In a preferred embodiment, the bearing means each comprise at least one screw element, wherein the screw element is rotatably mounted with respect to the transparent bottom and a rotation of the screw element causes a displacement of the corresponding actuation point along the actuation axis of the respective bearing means. By using a screw element, the adjustment of the lens shaping element in each actuation point can be achieved in a simple way, depending on a screw angle of at least one screw element. The screw angle corresponds to an angle, by which the screw element can be rotated around a longitudinal axis in order to cause a displacement of the actuation point. The lens shaping element can be adjusted in different ways depending on how the screw element is mounted within the optical device.

In a first possible embodiment, each screw element is moveably mounted along the longitudinal axis of the respective bearing means. Each screw element comprises a screw tip, which is designed to transmit a displacement motion of the screw element to the corresponding actuation point of the lens shaping element.

According to the first possible embodiment, the screw element has a longitudinal axis and a threaded radial surface. The threaded radial surface is designed to moveably bear the screw in a correspondingly designed nut element. Such a nut element may be attached to a frame of the optical device or another component of the optical device and have an inner diameter that corresponds to an outer diameter of the screw element. By rotating the screw element, it is displaced along the longitudinal axis as a function of a thread pitch and the screw angle.

The screw tip is preferably designed to push the lens shaping element in one actuation point along the longitudinal axis of the screw element to achieve a displacement of the lens shaping element in the actuation point. In order to reverse such a displacement, the aforementioned screw element can be rotated reversely. In this case, the screw tip may be mechanically attached to the lens shaping element in an actuation point so that the lens shaping element may also be pulled by the screw tip. Additionally, or alternatively, a second screw element may be arranged on an opposite side of the lens shaping element and be rotated around the longitudinal axis in order to exert a pushing or pulling adjustment force to the lens shaping element. In this case, the bearing means comprises two screw elements.

In a second possible embodiment, each screw element is non-moveable along the longitudinal axis of its respective bearing means. Each screw element comprises a threaded radial surface, which is designed to transmit a displacement motion of the screw element to the corresponding actuation point of the lens shaping element, preferably via a spindle nut.

In contrast to the first preferred embodiment as described above, the lens shaping element can be adjusted at an actuation point without moving the screw element along the longitudinal axis of its bearing means. Instead, the lens shaping element has a mechanical interface that is designed to interact with the threaded radial surface of the screw element, such that a rotation of the screw element around the longitudinal axis causes a displacement of the lens shaping element in the actuation point along the longitudinal axis.

A spindle nut can be used as an additional element to which the lens shaping element can be attached in the actuation point and have a thread that corresponds to the thread of the screw element. This means that the lens shaping element can be designed without a mechanical interface on its own that corresponds to the thread of the screw element. This is advantageous, because the lens shaping element may be designed thin walled.

In a preferred embodiment, the amount of actuation points is at least six and the actuation points are distributed along the perimeter of the lens shaping element such that the relative displacement of at least one actuation point with respect to the at least another actuation point causes the central area to bend according to a Zernike polynomial with a radial degree greater than zero, particularly comprising at least one of the modes ${Z}_{2}^{0} , {Z}_{1}^{- 1} , {Z}_{1}^{1} , {Z}_{2}^{- 2} , {Z}_{2}^{2}$.

By means of the preferred embodiment described above, it is possible to correct specific aberrations, in particular aberrations that frequently occur in the human eye, so that the optical device is specifically useful as an ophthalmic device.

According to the preferred embodiment, the mode ${Z}_{2}^{0}$ corresponds to a convex shape of the central area, which may be rotationally symmetrical with respect to the optical axis of the optical device, if the central area has a circular shape. The mode ${Z}_{2}^{0}$ is also referred to as defocus and is adjustable as a function of the pressure of the transparent liquid. Said pressure of the transparent liquid is adjustable by a uniform displacement of the actuation points parallel to the optical axis of the optical device. A change of the pressure of the transparent liquid therefore causes the central area of the membrane to deform according to the mode ${Z}_{2}^{0}$.

According to the preferred embodiment, the modes ${Z}_{1}^{- 1}$ and ${Z}_{1}^{1}$ each refer to a tilt of the central area around an axis each, which is orthogonal to the optical axis of the optical device. A person skilled in the art might define an x-axis and a y-axis, which are perpendicular to the optical axis, that can be defined as a z-axis of the optical device. With these axes defined, mode ${Z}_{1}^{- 1}$ may represent a tilt of the central area of the membrane around the y-axis, while mode ${Z}_{1}^{1}$ may represent a tilt of the central area of the membrane around the x-axis. The modes ${Z}_{2}^{- 2}$ and ${Z}_{2}^{2}$ correspond to oblique and vertical astigmatism respectively. The modes ${Z}_{1}^{- 1} , {Z}_{1}^{1} , {Z}_{2}^{- 2} , {Z}_{2}^{2}$ are controllable by adjusting the relative position of the actuation points.

The object of the invention is also solved by a tuning unit according to claim 8. The tuning unit is suitable to be used with an optical device according to the invention or a preferred embodiment thereof. According to the invention, the tuning unit comprises at least one actuator, which is arranged to interact with the lens shaping element in at least one of its actuation points and/or its bearing means and is configured to adjust the lens shaping element and the membrane in the central area of the optical device by a relative displacement of at least one actuation point with respect to the transparent bottom of the optical device. Preferably, the tuning unit is designed to cause a relative displacement of at least one actuation point with respect to at least another actuation point. More particularly, the tuning unit may comprise a plurality of actuators, which are arranged correspondingly to the actuation points of the lens shaping elements, and which each are designed to interact with all actuation points and/or bearing means of the optical device simultaneously.

The tuning unit is designed to adjust the optical properties of the optical device as needed. It may be designed as a stationary device, which comprises an adapter in order to mount the optical device and to adjust the lens shaping element in at least one actuation point with respect to the transparent bottom or at least another actuation point. It may also be designed as a portable device, that may be arranged next to the optical device in a way, that allows to adjust the lens shaping element in one actuation point with respect to the transparent bottom or at least another actuation point.

The invention is not limited to a specific kind of actuator that is used for the adjustment of the lens shaping element in the actuation point. Rather, the actuator is designed correspondingly to the design of the lens shaping element and/or the bearing means. It is within the scope of the invention, that the actuators are designed to directly interact with the lens shaping element in at least one actuation point or with the bearing means that allows a displacement of at least one actuation point.

In a preferred embodiment, the tuning unit comprises at least one actuator with a drive and a screwdriver, wherein the drive is configured to propel the screwdriver in a rotary motion around a longitudinal axis and wherein the screwdriver and at least one screw element of the optical device comprise corresponding mechanical interfaces so that the rotary motion of the screw driver is transmittable to the screw element and wherein the displacement of an actuation point is adjustable as a function of the rotary motion of the screwdriver.

The preferred embodiment of the tuning unit as described above is applicable to an optical device, wherein at least one bearing means comprises a screw element that is used in order to effect a displacement of the lens shaping element in at least one actuation point with respect to the transparent bottom and/or at least another actuation point. More particularly, the rotary motion of the screw driver may cause a displacement of a screw element that is moveably mounted along the longitudinal axis of its respective bearing means, wherein each screw element comprises a screw tip, which is designed to transmit a displacement motion of the screw element to the corresponding actuation point of the lens shaping element. Furthermore, the rotary motion of the screw driver may propel a screw element, which is non-moveable along the longitudinal axis of its respective bearing means and comprises a threaded radial surface, which is designed to transmit a displacement motion of the screw element to the corresponding actuation point of the lens shaping element, preferably via a spindle nut.

In a preferred embodiment, the tuning unit comprises a controller unit, which is connected to the drive by means of signal transmission and wherein a dataset is available in the controller unit, which dataset represents a targeted tuning state of the screw element and/or an information corresponding thereto and wherein the controller unit is configured control the drive to propel the screwdriver in order to displace the screw element from an initial tuning state to the targeted tuning state. The controller unit may be designed as a microcontroller or a similar device that allows an automated operation of the tuning unit. The dataset may be stored in a storage unit of the controller unit or the optical device, particularly a FLASH-ROM, EEPROM or comparable storage means. The dataset can also be stored in a memory unit of the optical device or a bar code that is attached to the optical device. This allows the optical device to store the necessary dataset.

It is within the scope of the preferred embodiment that the controller unit comprises a communication module that receives the dataset from another device that is operated by a user of the tuning unit. The dataset may comprise an information that represents a targeted tuning state, especially a total displacement of an actuation point of the lens shaping element with respect to the transparent bottom. The controller unit translates the dataset into a specific target state for each actuator before or during the interaction of the actuator with the bearing means or the actuation point of the lens shaping element. The dataset can be defined during an initial calibration in the factory of the optical device and/or the tuning unit or at the point of sales.

In a preferred embodiment, the initial tuning state is represented by a rotation angle and/or a screwing height of the screwing element and the tuning unit comprises a sensor means to detect the initial tuning state and to transmit the initial state to the controller unit. The tuning unit may be designed to detect the actual position of the screw element and adjusts the position of screw element until the targeted tuning state is reached. The sensor means may be configured as a sensor that is capable of detecting a characteristic feature of the screw element, more particularly an identity of the screw element and/or its tuning state. More particularly, the sensor means may be configured as a contactless sensor or a sensor that is integrated within the drive of the tuning unit.

In a preferred embodiment, the controller unit, the drive and the sensor means at least partially define a feedback loop, wherein the sensor means is configured to detect an actual tuning state of the screw element during a tuning process and to transmit an actual tuning state to the controller unit, which is designed to control the drive as a function of the initial tuning state and/or the actual tuning state and/or the targeted tuning state. In this preferred embodiment, the tuning unit is designed to monitor the setting of at least one screw element by means of a control circuit. The tuning of the screw element is thus not controlled with fixed predefined parameters, but by repeatedly measuring the tuning state of at least one screw element. This improves the accuracy of the tuning process.

In a preferred embodiment, the controller unit and the drive are configured to set the initial tuning state of the screw element by tuning the screw element into an end position. The advantage of this preferred development is that the initial tuning state of the screw element does not necessarily have to be measured or detected in order to bring the screw element into the targeted tuning state. Instead, the initial tuning state is automatically set by bringing the corresponding screw element into the end position. This means that the screw element is rotated until no further adjustment of the lens shaping element is possible at the corresponding actuation point. Then the screw element is rotated by a defined angle relative to the end position in order to adjust the lens shaping element in the actuation point according to the desired targeted tuning state.

In a preferred embodiment the sensor means is configured to determine an actual position and/or deformation of the central area and/or a corresponding information thereto and the controller unit is configured to transform the actual deformation of the central area in the tuning states of the screw elements.

The preferred embodiment of the tuning unit described above comprises a sensor means that detects the deformation of the central area alternatively or additionally to the detection of the tuning state of a single or multiple screw elements. The sensor means may comprise an image sensor, especially a camera system, that determines the state of the central area optically, for example by transmissive of reflective measurement of the shape of the flexible membrane surface. Such sensor means provides image data that corresponds to the state of the central area. Such an optical sensor element may also be arranged to determine the deflection of the flexible shaper with respect to the optical axis at the actuation points. The tuning unit may not only serve as tuning unit but also as charging station of a device, which uses the optical device, especially glasses or a AR/VR headset. A software that runs on the controller unit allows to select/store the parameters of a specific person for which the optical properties of the optical device are adjusted for.

The object of the invention is also solved by a tuning unit according to claim 17. The optical system comprises an optical device, particularly an ophthalmic device, with a container that encloses an internal space, wherein the internal space is filled with a transparent liquid, and wherein the container comprises a transparent bottom and a transparent and elastically deformable membrane opposing said bottom such that the liquid is arranged between the membrane and the bottom. A circumferential lens shaping element is connected to the membrane so that a circumferential edge of the lens shaping element defines a central area of the membrane so that light can pass through the container via the central area and the bottom. The lens shaping element is deformable and comprises a plurality of actuation points, wherein in each of the actuation points the lens shaping element is moveably mounted with respect to the transparent bottom by a bearing means and wherein at least one actuation point is displaceable with respect to the transparent bottom. The optical system further comprises a tuning unit with at least one actuator, which is arranged to interact with the lens shaping element of the optical device in at least one of its actuation points and/or its bearing means and is configured to adjust the lens shaping element and the membrane in the central area of the optical device by a relative displacement of at least one actuation point with respect to the transparent bottom and/or with respect to another actuation point. The optical device and the tuning unit are optionally connectable to each other detachable from each other. **In** other words, the optical device and the tuning unit are releasable connectable to each other. In particular, the mechanical connection between the optical device and the tuning unit may be repeatedly connected and disconnected without destroying the tuning unit or the optical device. In a connected state, the tuning unit is configured to change at least one optical property of the optical device, particularly by an interaction between the at least one actuator with at least one actuation point and/or a bearing means.

The optical device of the optical system is operable independently of the tuning unit. For this purpose, the optical device can be detached from the tuning unit. However, if the optical properties of the optical device are to be changed, in particular to enable correction of a specific aberration, the optical device can be connected to the tuning unit. The actuator of the tuning unit is used to interact with the optical device in the manner described above in order to change its optical properties. Subsequently, the optical device can be disconnected from the tuning unit again and used for its intended purpose.

Preferably, the optical device has a connecting element that corresponds to a connecting element of the tuning unit. Preferably, the connecting elements are designed as mutually corresponding guide pieces, latching elements or clamping elements and preferably serve to position the optical device releasably and in a defined alignment with respect to the tuning unit. In particular, such connecting elements can be arranged on a housing or a frame of the optical device and/or on a housing or a frame of the tuning unit.

The optical system according to the invention preferably comprises the optical device according to the invention or a preferred development thereof. Preferably, the optical system according to the invention comprises the tuning unit according to the invention or a preferred embodiment thereof.

In the following, examples of the present invention and its preferred embodiments are described with reference to the accompanying drawings.
- Figure 1: shows an embodiment of an optical device according to the invention in side view;
- Figure 2A: shows the embodiment of the optical device according to the invention in top view;
- Figure 2B: shows another embodiment of an optical device according to the invention in top view;
- Figure 3: shows the embodiment of the optical device with an embodiment of a tuning unit according to the invention in side view;
- Figure 4: shows another embodiment of an optical device according to the invention with another embodiment of a tuning unit according to the invention in side view;
- Figure 5: shows another embodiment of an optical device according to the invention with another embodiment of a tuning unit according to the invention in side view.

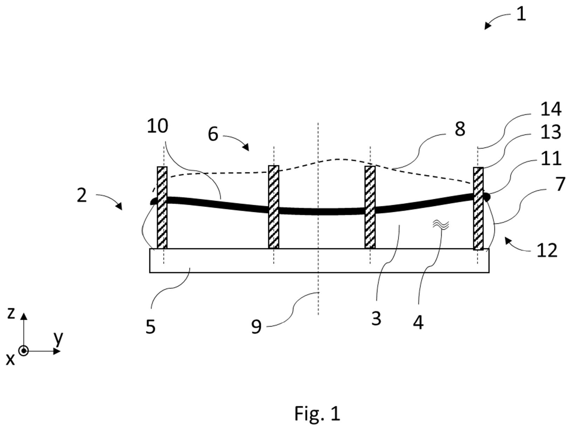

For better understanding, the reference numerals as used in Figures 1 to 5 are listed below.
- 1: Optical device
- 2: Container
- 3: Internal space
- 4: Transparent liquid
- 5: Transparent bottom
- 6: Membrane
- 7: Lateral wall
- 8: Central area
- 9: Optical axis
- 10: Lens shaping element
- 11: Actuation point
- 12: Bearing means
- 13: Screw element
- 14: Longitudinal axis
- 15: Tuning unit
- 16: Screwdriver
- 17: Controller unit
- 18: Sensor means
- 19: Image sensor
- 20: Calibration pattern

Figure 1 shows an optical device 1 that may be used in a wearable virtual reality (VR-) device. When wearing such a VR-device, the optical device 1 may be arranged between a screen of the VR-device and a human eye and allows to correct an aberration of a human eye. Therefore, such a VR-device is particularly useful for people with a visual impairment that is usually corrected with glasses. Glasses are very uncomfortable to wear when using a known VR-device. By correcting said aberration, the optical device 1 provides an overall good user experience when wearing said VR-device since high quality VR-images can be experienced without wearing glasses or the like.

The optical device 1 as shown in Figure 1 comprises a container 2 enclosing an internal space 3, wherein the internal space 3 is filled with a transparent liquid 4. The container 2 comprises a transparent bottom 5 and a transparent and elastically deformable membrane 6. The membrane 6 is arranged opposed to the transparent bottom 5 such that the liquid 4 is enclosed between the transparent bottom 5 and the membrane 6. A lateral wall 7 is configured to be a sealing member that encloses the internal space 3 between the membrane 6 and the transparent bottom 5.

The optical device 1 has an optical axis 9, along which the light passes through the container 2. The optical device 1 is designed in a way that a central area 8 of the membrane 6, which is enclosed by a lens shaping element 10, can be displaced with regard to the transparent bottom 5 or be deformed in order to change the optical properties of the optical device 1 and to influence the path of light that passes through the optical device 1.

In order to deform or to adjust the central area 8 relative to the transparent bottom, the circumferential lens shaping element 10 is arranged between the membrane 6 and the lateral wall 7. The lens shaping element 9 comprises a plurality of actuation points 11, that are evenly distributed along its perimeter. The actuation points 11 are configured in a way that they each are mechanically connected to a respective bearing element 12 of the optical device 1 and can each be displaced, if required, along a longitudinal axis 13 of a respective bearing element 12, which runs parallel to the optical axis 9 of the optical device 1.

According to the embodiment that is shown in Figure 1, the bearing elements 12 each comprise a screw element 13 that is rotatably mounted with respect to the transparent bottom 5. A rotation of one of the screw elements 13 causes a displacement of the corresponding actuation point 11 along the longitudinal axis 14 of the bearing element 12. The screw elements 13 are mounted such that they are non-moveable along the longitudinal axis 14, however are rotatable around said longitudinal axis 14. A rotation of one screw element 13 causes a displacement of the corresponding actuation point 11 of the lens shaping element 10.

The lens shaping element 10 is designed to delimit the central area 8 of the membrane 6. A uniform displacement of all actuation points 11, the membrane 6 and thus also the central area 8 are uniformly adjusted in a piston movement with regard to the transparent bottom 5. A displacement of a single actuation point 11 is achieved by rotation of the corresponding screw element 13 and may lead to a deformation of the central area 8 as a function of the displacement of the actuation points 11.

The actuation points 11 are arranged in a way, that their displacement allows the central area 8 of the membrane 6 to be shaped according to a Zernike polynomial with a degree greater than zero. More particularly, the central area 8 of the membrane 6 may be shaped according to a Zernike polynomial with a mode ${Z}_{2}^{0}$. For this purpose, the actuation points 11 can be displaced evenly parallel to the optical axis 9 of the optical device 1, which affects the pressure in the transparent liquid 4. This leads to a convex shape of the central area 8 in order to defocus.

Alternatively, the central area 8 of the membrane 6 may be shaped according to a Zernike polynomial with a mode ${Z}_{1}^{- 1}$. With regard to the coordinate system shown in Figure 1, mode ${Z}_{1}^{- 1}$ represents a tilt of the central area of the central area 8 around the y-axis. Furthermore, the central area 8 can be shaped according to a Zernike polynomial with a mode ${Z}_{1}^{1}$ that represents a tilt of the central area 8 around the x-axis. Furthermore, modes ${Z}_{2}^{- 2}$ and ${Z}_{2}^{2}$ are adjustable, which correspond to oblique and vertical astigmatism respectively.

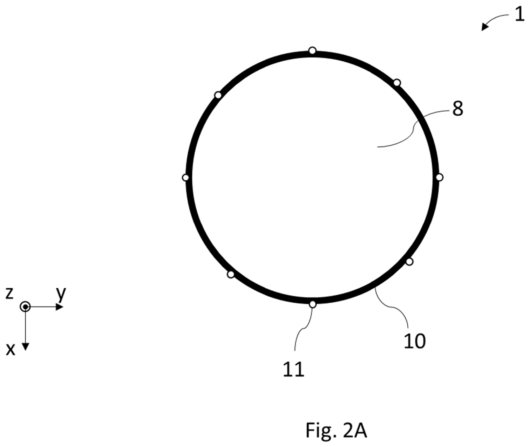

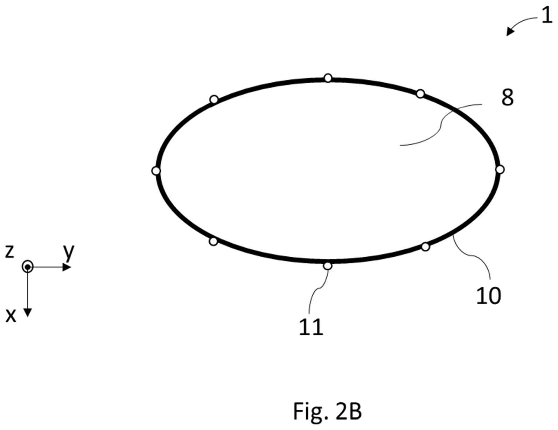

Figure 2A and 2B show different possible embodiments of the optical device 1 according to Figure 1.

According to a first possible embodiment, which can be seen in Figure 2A, the optical device 1 has a substantially circular contour. The lens shaping element 10 is also circular, so that the central area 8 of the membrane 6 is limited accordingly.

According to a second possible embodiment, which can be seen in Figure 2B, the optical device 1 has an oval contour. According to another embodiment, which is not shown here, the contour may also be polygonal, or freeformed such that the shape of the optical device 1 is adapted to the visual field of the human eye.

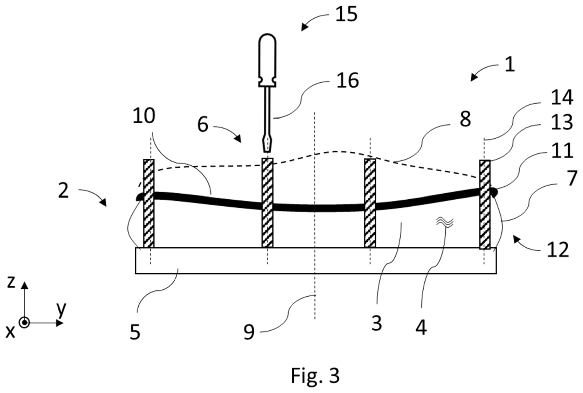

Figure 3 shows a tuning unit 15 for the optical device 1 as shown in Figures 1 and 2A or 2B. The tuning unit 15 is configured as a smart screwdriver, which is arranged to interact with the screw elements 13 in order to displace at least one of the actuation points 11 and is configured to adjust a deformation of the lens shaping element 9 and the central area 8 of the membrane 6 by a relative displacement of at least one actuation point 11 with respect to the transparent bottom 5.

The tuning unit 15 comprises a drive (not shown) and a screwdriver 16, wherein the drive is configured to propel the screwdriver 16 in a rotary motion around a longitudinal axis and wherein the screwdriver 16 and at least one screw element 13 of the optical device 1 comprise corresponding mechanical interfaces so that the rotary motion of the screw driver 16 is transmittable to the screw element 13 and wherein the displacement of an actuation point 11 is adjustable as a function of the rotary motion of the screwdriver 16.

The tuning unit 15 is arranged to identify the screw element 13 it is attached to and at least the targeted tuning state for the screw element 13 in order define a desired shape of the central area 6.

The screw element 13 can be identified as a function of the spatial position of the screw element 13 relative to a reference point (not shown) of the tuning unit 15 or within the optical device 1. An information storage unit (not shown) can be configured to store information about the last set position of the screw elements 13 and can be read before a tuning process and used as the basis for a further tuning. The screw driver 13 may comprise a read-write-unit (not shown) configured to read and rewrite information stored in the information storage unit of the optical device. More particularly, it is possible to write a number of turns or an angle of rotation or a comparable information in the storage unit after the completion of the screwdriving operation.

Alternatively, each screw element 13 may have an information storage unit (not shown), such as an RFID tag, in which an identification number or comparable information regarding the identity of the screw element 13 is stored. The screwdriver 16 may comprise an RFID read-write-unit configured to detect the ID number of the screw element 13 before the start of the screwdriving operation and to write a number of turns or an angle of rotation or comparable information on the RFID tag of the screw element 13 after the completion of the screwdriving operation. Additionally or alternatively, an initial tuning state of the screw element 13 can be set by the screw driver 16, by tuning the screw element 13 into an end position. Starting from this end position, the screw element 13 can be rotated until a targeted position is reached.

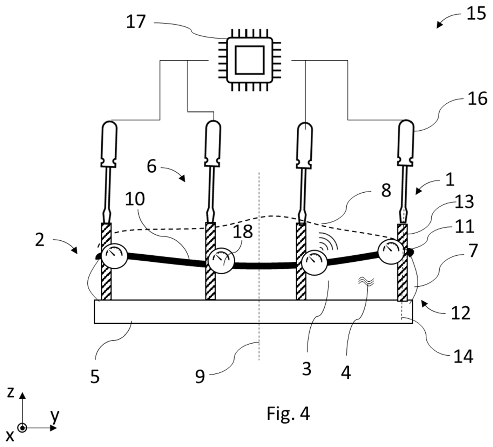

Figure 4 shows another tuning unit 15 with a plurality of screwdrivers 16. The tuning unit 15 comprises a controller unit 17, which is connected to the drives (not shown) of the screwdrivers 16 by means of signal transmission and wherein a dataset is available in the controller unit 17. The dataset represents a targeted tuning state of the screw elements of the optical device 1 and wherein the controller unit 14 is configured to control the drives (not shown) to propel the screwdrivers 16 in order to set each of the screw elements 13 from an initial tuning state to the targeted tuning state. In this embodiment, the initial tuning state is represented by a rotation angle and a screwing height of the screwing element and the tuning unit 15 comprises a sensor means 18 to detect the initial tuning state and to transmit the initial state to the controller unit 17.

The sensor means 18 are configured as contactless sensors that allow to determine the rotation angle and a screwing height of one screwing element 13 each. Alternatively or additionally, the sensor means 18 can be configured to measure the height of the lens shaping element 10 or a section of its periphery. The height of the lens shaping element 10 or a section of its periphery can particularly be measured with respect to a reference point that is defined by a geometrical feature of the optical device 1, e.g. a housing or frame element (not shown).

The controller unit 14, the drive (not shown) and the sensor means 15 at least partially define a feedback loop, wherein the sensor means 15 are each configured to detect an actual tuning state of the screw element 13 during a tuning process and to transmit an actual tuning state to the controller unit 17, which is designed to control the drive (not shown) as a function of the initial tuning state, the actual tuning state and the targeted tuning state.

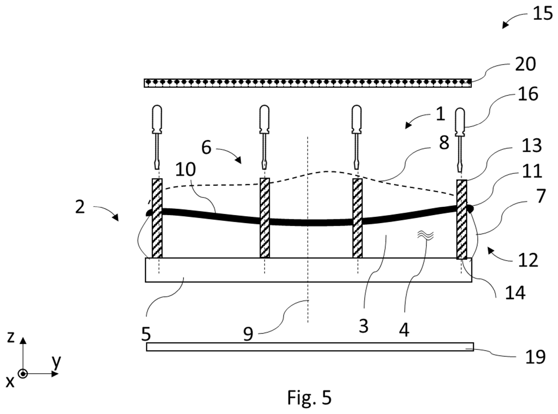

Figure 5 shows another tuning unit 15 with a plurality of screwdrivers 16. The tuning unit 15 comprises an image sensor 19 and a calibration pattern 20. The optical device 1 is arranged between the image sensor 19 and the calibration pattern 20. The calibration pattern 20 can comprise a surface structure or printing, which can be detected by means of the image sensor 19 on the opposite side of the optical device 1. The sensor 19 may also be configured as a wavefront sensor, that allows to determine the shape of the central area 8 of the membrane 6.

Depending on the position of the central area 8 or its position relative to the transparent bottom 5, the surface structure or the printing of the calibration pattern 20 which is detected by the image sensor 19 is deviated with respect to the optical axis in accordance to the optical properties of the optical device 1. By measuring the calibration pattern 20 through the optical device 1 using the image sensor 19, image data is obtained that is compared with the nominal structure or printing of the calibration pattern 20. This can be done by using digital image processing methods. A mathematical model, which is created analytically or experimentally, allows to convert the deviations between the image data of the sensor means 19 and the nominal structure or printing of the calibration pattern 20 to at least one position of one actuation points 11 with respect to the transparent bottom 5 and/or relative to another actuation point 11. Accordingly, the mathematical model is used to calculate at least one targeted position of an actuation point 11 with respect to the transparent bottom 5 and/or relative to another actuation point 10 that needs to be set, in order to adjust the curvature of the central area 8 of membrane 6 in a desired manner.

## Claims

1. An optical device (1), particularly an ophthalmic device, comprising:
- a container (2) enclosing an internal space (3), wherein the internal space (3) is filled with a transparent liquid (4), and wherein the container (2) comprises a transparent bottom (5) and a transparent and elastically deformable membrane (6) opposing said bottom (5) such that the liquid (4) is arranged between the membrane (6) and the bottom (5),
- a circumferential lens shaping element (10) connected to the membrane (6) so that a circumferential edge of the lens shaping element (10) defines a central area (8) of the membrane (6) so that light can pass through the container (2) via the central area (8) and the bottom (5), wherein
- the lens shaping element (10) is deformable and comprises a plurality of actuation points (11), wherein in each of the actuation points (11) the lens shaping element (10) is moveably mounted with respect to the transparent bottom (5) by a bearing means (12) and wherein at least one actuation point (11) is displaceable with respect to the transparent bottom (5),
wherein the optical device (1) is releasably connectable to a tuning unit which is configured to change at least one optical property of the optical device by an interaction between an actuator of the tuning unit with at least one of the actuation points and/or a bearing means of the optical device, when in a connected state.

2. The optical device (1) according to claim 1, wherein a mechanical connection between the optical device and the tuning unit is repeatedly connectable and disconnectable without destroying the tuning unit or the optical device.

3. The optical device (1) according to claim 1 or claim 2, wherein the bearing means (12) each comprise at least one screw element (13), the screw element (13) being configured to cause a displacement of the corresponding actuating point (11) along an actuating axis of the respective bearing means (12).

4. The optical device (1) according to claim 3, wherein each screw element (13) is non-moveable along the longitudinal axis (14) of its respective bearing means (12) and wherein each screw element (13) comprises a threaded radial surface, which is designed to transmit a displacement motion of the screw element (12) to the corresponding actuation point (11) of the lens shaping element (10), preferably via a spindle nut.

5. The optical device (1) according to one of claims 1 to 4, wherein
a deformation of the lens shaping element (10) and the membrane (6) in the central area (8) is adjustable by a relative displacement of at least one actuation point (11) with respect to at least another actuation point (11).

6. The optical device according to one of claims 1 to 5, comprising
an optical axis (9), along which the light passes through the container (2) via the central area (8) and the transparent bottom (5), wherein the bearing means (12) each comprise a longitudinal axis (14), which is parallel to the optical axis (9), and wherein the bearing means (12) each are configured to adjustably guide the lens shaping element (10) along its respective longitudinal axis (14) in each of the actuation points (11).

7. The optical device (1) according to one of the claims 1 to 6, wherein
the amount of actuation points (11) is at least five and the actuation points (11) are distributed along the perimeter of the lens shaping element (10) such that the relative displacement of at least one actuation point (11) with respect to the at least another actuation point (11) causes the central area (8) to be shaped according to a Zernike polynomial with a radial degree greater than zero, particularly comprising at least one of the modes ${Z}_{2}^{0} , {Z}_{1}^{- 1}$, ${Z}_{1}^{1} , {Z}_{2}^{- 2} , {Z}_{2}^{2}$.

8. Tuning unit (15) for an optical device (1) according to one of the claims 1 to 7, comprising a plurality of actuators each comprising a drive (16), which are arranged according to the actuation points (11) of the lens shaping element (10), and which each are designed to interact with all actuation points (11) and/or bearing means (12) of the optical device (1) simultaneously.

9. Tuning unit (15) according to claim 8, comprising
a controller unit (17), which is connected to the drive by means of signal transmission and wherein a dataset is available in the controller unit (17) or the optical device (1), which dataset represents a targeted tuning state of the optical device (1) and/or an information corresponding thereto and wherein the controller unit (17) is configured to control the drive.

10. Tuning unit (15) according to claim 9, wherein
an initial tuning state is represented by a position of the lens shaping element (10) and the tuning unit (15) comprises a sensor means (18,19) to detect the initial tuning state and to transmit the initial state to the controller unit.

11. Tuning unit (15) according to claim 10, wherein
the controller unit (17), the drive and the sensor means (18) at least partially define a feedback loop, wherein the sensor means (18) is configured to detect the position of lens shaping element (10) during a tuning process and to transmit an actual tuning state to the controller unit (17), which is designed to control the drive as a function of the initial tuning state and/or the actual tuning state and/or the targeted tuning state.

12. Tuning unit (15) according to claim 11, wherein
the controller unit (17) and the drive are configured to set the initial tuning state of a screw element (13) of the optical device (1) by tuning the screw element (13) into an end position.

13. Tuning unit (15) according to one of the claims 8 to 12, wherein
the sensor means (18,19) is configured to determine an actual deformation of the central area (6) and/or a corresponding information thereto and the controller unit (17) is configured to transform the actual deformation of the central area (17) in at least one tuning state.

14. Tuning unit (15) according to claim 13, comprising
at least a calibration pattern (20) and at least an image sensor (19) that are arrangeable in a transmissive and/or a reflective arrangement with respect to the optical device (1), and wherein the image sensor (19) is connected to the controller unit (17) by means of signal transmission and the controller unit (17) is configured to identify the actual deformation of the central area (8) as a function of image data.
